# EUROPÄISCHE PATENTANMELDUNG

(11) **EP 1 800 765 A2**
(43) Veröffentlichungstag der Anmeldung: **27.06.2007**
(21) Anmeldenummer: 06022270.0
(22) Anmeldetag: 25.10.2006
(51) Int. Cl.: B08B 9/08, B65G 59/02

(54) **Verfahren und Vorrichtung zum Entpalettieren von Sammelbehältern**

(30) Priorität: 21.12.2005 DE 102005061733
(71) Anmelder: KRONES Aktiengesellschaft, 93073 Neutraubling (DE)
(72) Erfinder: Erben, Manfred, 83024 Rosenheim (DE)

(57) **Zusammenfassung**

Die Erfindung betrifft eine Vorrichtung und ein Verfahren zum Entpalettieren von Sammelbehältern (B) durch Abnehmen der Behälter von einem Stapel und Umsetzen auf einen seitlich beabstandeten Ablauftisch (A), wobei die wenigstens einseitig offenen Behälter vor oder während dem Umsetzen um eine im Wesentlichen horizontale Achse gewendet werden, vorzugsweise um 180°.

## Beschreibung

Die Erfindung betrifft ein Verfahren und eine Vorrichtung zum Entpalettieren von Sammelbehältern durch Abnehmen der Behälter von einem Stapel und Umsetzen auf einen seitlich beabstandeten Ablauftisch.

Einseitig offene Sammeltransportbehälter aus Kunststoff oder einem anderen steifen Material werden für den Transport und Versand von Kleinteilen, Gefäßen oder andere Gegenstände verwendet, z. B. in der Zulieferindustrie der Automobilbranche. In der Regel handelt es sich dabei um Mehrwegbehälter, die zumindest gelegentlich, wenn nicht gar bei jedem Rücklauf vollständig entleert und gereinigt werden müssen. Es ist bekannt, die üblicherweise auf einer Palette in mehreren Lagen zu einem Stapel aufgeschichteten Behälter mit einer herkömmlichen Entpalettiermaschine schichtweise vom Behälterstapel abzuheben und auf einen Ablauftisch umzusetzen, vom dem aus die Behälter reihenweise auf einen Behälterförderer liniert werden, der den im Normalfall einspurigen Behälterstrom dann beispielsweise einer Reinigungsmaschine zuführt.

Für den genannten Vorgang kann eine Entpalettiermaschine beispielsweise entsprechend DE 295 05 864 U zum Einsatz kommen.

Werden die auf einer Palette gestapelten Behälter mit ihrer Öffnung nach oben weisend angeliefert und in herkömmlicher Art schichtweise entpalettiert, bereitet das Linieren, d.h. zeilenweise Abführen der Behälter vom Ablauftisch, mit mechanischen Abreiheinrichtungen in der Regel keine Probleme. Ungünstigerweise verbleiben dann jedoch Verpackungsreste und sonstige Abfälle in den Behältern. Noch vor Erreichen der Behälterwaschmaschine müssen diese Fremdkörper entweder manuell oder durch eine vorgeschaltete Einrichtung (siehe DE 44 10 033 A1) entfernt werden.

Werden die Behälter in den Rückgutpalettenladungen mit ihrer Öffnung nach unten weisend gestapelt angeliefert, können in den Behälter evtl. vorhandene Fremdkörper zwar beim Umsetzen der Behälter während dem Entpalettiervorgang selbsttätig nach unten herausfallen, allerdings bereitet das Abreihen von kopfüber auf dem Ablauftisch abgelegten Behältern häufig Probleme.

Der Erfindung liegt demzufolge die Aufgabe zugrunde, ein Verfahren und eine Vorrichtung zum Handhaben von gestapelten Sammeltransportbehältern anzugeben, das/die wenig Aufwand erfordert und betriebssicher arbeitet.

Gelöst wird die Aufgabe durch ein Verfahren und eine Vorrichtung, das/die ein Wenden der Sammeltransportbehälter im Zuge der Entpalettierung ermöglicht.

Das Wenden der Behälter vor oder während dem Umsetzen von einer Palette zum Ablauftisch erlaubt auch eine kopfstehende Bereitstellung der Behälter auf der Palette mit nach unten weisender Öffnung, so dass ggf. vorhandene Fremdkörper beim Abheben der Behälter vom Stapel selbsttätig nach unten herausfallen können. Zudem ist durch das in Folge des Wendevorganges mögliche bodenstehende Ablegen der Behälter auf dem Ablauftisch mit nach oben weisender Öffnung ein betriebssicheres, störungsarmes Abreihen bzw. Linieren auch von in ganzen Lagen entpalettierten Behältern sichergestellt. Hierzu muss bei einer bekannten Entpalettiermaschine der eingangs genannten Art lediglich in der Aufhängung eines ansonsten unveränderten Greifkopfes eine im Wesentlichen horizontale Schwenkachse vorgesehen werden, die ein Wenden der Behälter vor oder während der Umsetzbewegung, vorzugsweise von annähernd 180°, ermöglicht. Die restliche Mechanik kann weitgehend unverändert beibehalten werden.

Alternativ kann eine separate, beispielsweise einem Entladeplatz zugeordnete Wendeachse vorgesehen werden, die jedoch mit der Steuerung der Entpalettiermaschine zur sicheren Synchronisierung der Achsenbewegungen gekoppelt ist.

Bevorzugt ist im Umsetzbereich zwischen einem Palettenentladeplatz und dem Ablauftisch ein Freiraum zum Auffangen der aus den Behältern herausfallenden Fremdkörper vorgesehen, dem eine Auffangeinrichtung mit Mitteln zum Sammeln und/oder Abführen der Fremdkörper, wie Förderbänder oder dgl. zugeordnet sein kann.

Es versteht sich, dass ein Wenden von Behältern vor oder während dem Umsetzen nicht nur bei lagenweise palettierten Behältern anwendbar ist, sondern auch bei einzeln oder reihenweise aufeinander gestapelten Behältern.

Ferner ist eine Ausführungsform mit einer Wendeeinrichtung möglich, bei der ein mehrere Schichten aufweisender Behälterstapel als gesamte Einheit von einem Greifkopf umfänglich erfasst und ggf. einschließlich einer den Behälterstapel tragenden Palette gewendet wird, um die Ausrichtlage der einseitig offenen Behälter umzukehren. Der Greifkopf ist dann vorzugsweise so gestaltet, dass jeder Behälterlage im Stapel eigene, bevorzugt individuell ansteuerbare Klemm- oder Greifelemente zum gesteuerten Festhalten oder Loslassen zugeordnet sind.

Der beim Entpalettieren stattfindende Wendevorgang ist nicht ausschließlich auf eine 180° Wendung der Behälter beschränkt, sondern kann auch in Form einer 360° Wendung ausgeführt werden, wenn beispielsweise die palettierten Behälter mit nach oben gerichteter Öffnung am Entladeplatz bereitgestellt und in gleicher Ausrichtung auf den Ablauftisch übergesetzt werden sollen, jedoch die Öffnung der Behälter beim Überqueren des Freiraums zwischen dem Entladeplatz und dem Ablauftisch zumindest kurzzeitig nach unten weisend gehalten werden soll, um Fremdkörpern und Abfällen ein freies Herausfallen zu ermöglichen.

Wenn zumindest im Bereich des Entladeplatzes eine Erkennungseinrichtung (Kamera, Taster etc.) vorgesehen wird, mit der feststellbar ist, ob die Behälterlagen auf einer Palette boden- oder kopfstehend angeliefert werden, kann in Verbindung mit einer entsprechenden Steuerung vorteilhafterweise ein selektives Umsetzen der einzelnen Lagen mit unterschiedlicher Lagenwendung (180° bzw. 360°) oder bei Bedarf ohne Wenden der Behälter erfolgen.

Nachfolgend werden bevorzugte Ausführungsbeispiele anhand der Figuren erläutert. Es zeigen:
- Fig. 1: eine schematische Seitenansicht einer Entpalettiereinrichtung in einer ersten Betriebsstellung,
- Fig. 2: die Entpalettiereinrichtung nach Fig. 1 in einer zweiten Betriebsstellung und

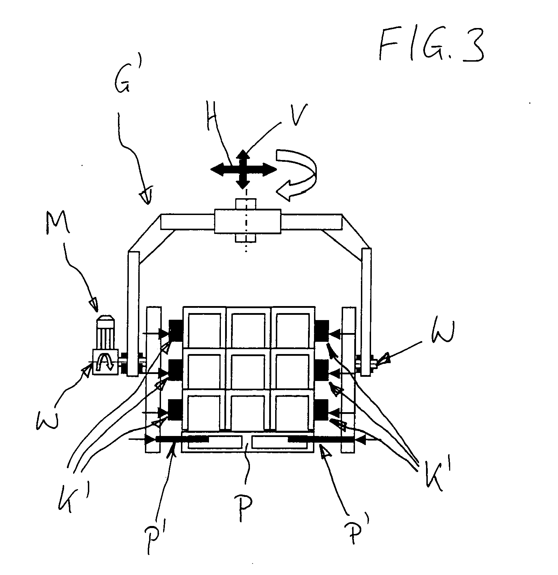

- Fig. 3: eine zweite Ausführungsform einer Entpalettiermaschine zum Wenden eines kompletten, mehrschichtigen Behälterstapels.

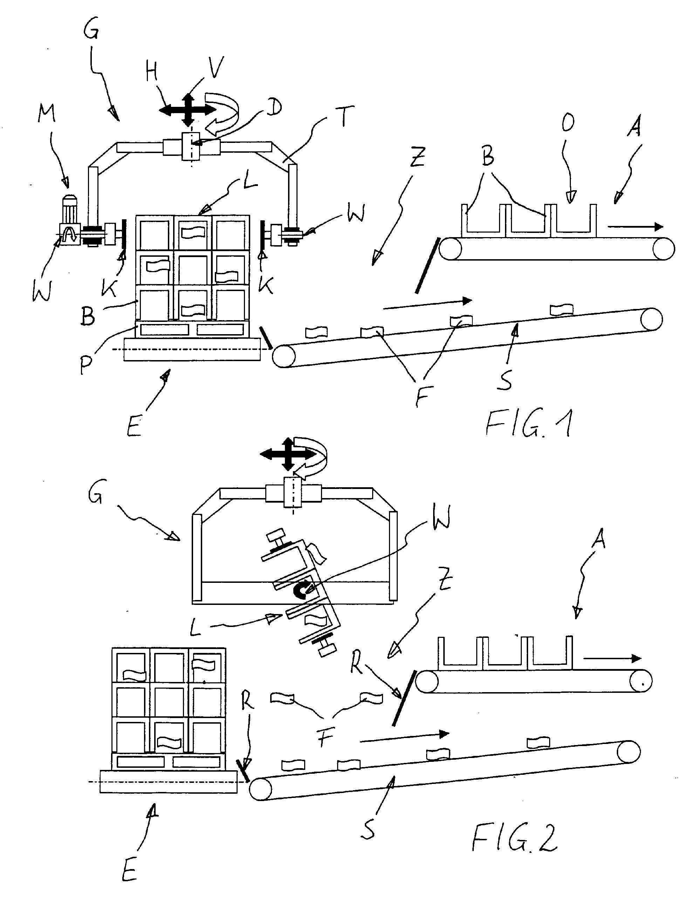

Figur 1 zeigt den Greifkopf G einer nicht näher dargestellten Entpalettiermaschine mit einer vertikalen Hubachse V und einer dazu rechtwinklig in horizontaler Ausrichtung verlaufenden Verfahrachse H. Die beiden Achsen V und H können können in an sich bekannter Weise durch Linearführungen (siehe DE 295 05 864 U) oder durch einen Knickarmroboter gebildet werden und ermöglichen in Verbindung mit einer programmierbaren Achsensteuerung für die Achsantriebe überlagerte Bewegungen zur Erzeugung beliebiger Bewegungsbahnen für den Greifkopf G, der entlang nach unten offenen, im Wesentlichen U-förmigen Bahnen abwechselnd zwischen einem Entladeplatz E und einem dazu seitlich beabstandeten Ablauftisch A hin- und zurückfahrbar ist. Gegebenfalls kann der Greifkopf G auch um eine vertikale Drehachse D verdrehbar an der Palettiermaschine aufgehängt sein.

Der eine bügelartige Tragkonstruktion T aufweisende Greifkopf G verfügt über mehrere gesteuert im Wesentlichen radial an eine aus mehreren Sammeltransportbehältern B bestehende Behälterlage L zu- und wegstellbaren Klemmbalken K zur allseitig reibschlüssigen Umfassung der zum Außenrand der Lage weisenden vertikalen Seitenwänden der einseitig offenen Behälter, die beispielsweise starre Kunststoffkästen sein können. Diese einen umfänglichen Rahmen bildenden Klemmbalken K sind als gesamte Einheit um eine horizontale Wendeachse W schwenkbar in der Tragkonstruktion T gelagert und können durch einen unabhängig steuerbaren Antrieb M mit wechselndem Drehsinn geschwenkt oder ggf. in nur eine Richtung vollständig durchgedreht werden.

Zwischen dem aus einem Rollenförderer oder dgl. gebildeten Entladeplatz E und dem Ablauftisch A besteht ein Zwischenraum Z, der in etwa der Breite einer Behälterlage L entspricht und Auffangeinrichtungen in Form von Leitblechen R und eine Abführeinrichtung S zum Abtransportieren von aus den Behältern stammenden Fremdkörpern F (Verpackungsmaterial etc.) aufweist.

Die mit ihrer Öffnung O nach unten weisend in mehreren Lagen übereinander auf einer Palette P aufgeschichteten Behälter B werden zum Abstapeln am Entladeplatz E bereitgestellt. Der Greifkopf G wird mit seitlich beabstandeten Klemmbalken K mittig in Höhe der obersten Behälterlage L positioniert und diese dann durch radiales Heranfahren der Klemmbalken K allseits eingespannt. Zur Betätigung der Klemmbalken sind nicht dargestellte ansteuerbare Betätigungselemente in Form von Pneumatikzylindern vorhanden. Im Anschluss wird die erfasste Behälterlage in Richtung der Hubachse V nach oben abgehoben und dann quer längs zur horizontalen Verfahrachse H in Richtung zum Ablauftisch A umgesetzt, wobei der Zwischenraum Z überquert wird. Verpackungsmaterial sowie loser Schmutz oder andere Fremdkörper können ungehindert nach unten aus den offenen Behältern B herausfallen.

Noch vor dem Ablegen und Freigeben der eingespannten, vom Greifkopf G kopfüber freihängend gehaltenen Behälterlage L auf dem Ablauftisch A erfolgt im Bereich des Zwischenraumes Z (siehe Fig. 2) ein Wenden der gesamten Behälterlage L von annähernd 180° um die horizontale Wendeachse W in eine mit der Öffnung nach oben gerichtete Behälterstellung, so dass die Behälter B mit ihrer Bodenfläche auf dem Ablauftisch A stehend zur Auflage kommen und im weiteren Verlauf zeilenweise in Richtung einer Behälterwaschmaschine (nicht dargestellt) liniert werden. Nach dem Zurückfahren des Greifkopfes G in Richtung zum Entladeplatz E kann die nächste tieferliegende Behälterlage abgehoben und in der beschriebenen Weise zum Ablauftisch A umgesetzt werden.

Bei Behältern mit einem von eins verschiedenen Seitenlängenverhältnis kann zudem während dem Umsetzvorgang ggf. auch noch eine Drehung von beispielsweise 90° um die vertikale Drehachse D ausgeführt werden, um die Behälter mit einer bestimmten Drehausrichtung auf den Ablauftisch zu bringen, damit diese einheitlich längs- oder querlaufend abtransportierbar sind.

Fig. 2 zeigt einen abgewandelten Greifkopf G' zum gleichzeitigen Erfassen aller Behälterlagen eines Stapels und ggf. auch der Palette P, um einen kompletten Behälterstapel in einem Arbeitsgang zu wenden. Zu diesem Zweck ist eine der maximal auf einer Palette möglichen Zahl von Behälterlagen entsprechende Anzahl von Klemmeinrichtungen K' vorgesehen, die in den Behälterlagen entsprechenden Höhenebenen angeordnet sind. Ferner kann auch eine angepasste Palettenklemmeinrichtung P' vorgesehen sein. Mit einem Schwerlastrobotor ist u.U. unmittelbar im Anschluss daran ein von unten erfolgendes Ablegen der einzelnen Behälterlagen auf dem Ablauftisch durch Bewegen des gesamten Stapels denkbar.

## Patentansprüche

1. Verfahren zum Entpalettieren von Sammelbehältern durch Abnehmen der Behälter von einem Stapel und Umsetzen auf einen seitlich beabstandeten Ablauftisch, wobei die wenigstens einseitig offenen Behälter vor oder während dem Umsetzen um eine im Wesentlichen horizontale Achse gewendet werden, vorzugsweise um 180°.

2. Verfahren nach Anspruch 1, **dadurch gekennzeichnet, dass** gleichzeitig mehrere Behälter lagenweise gewendet und umgesetzt werden.

3. Verfahren nach Anspruch 1 oder 2, **dadurch gekennzeichnet, dass** die wenigstens einseitig offenen, eine Bodenfläche mit an den Rändern senkrecht abstehenden Seitenflächen aufweisenden Behälter an einem Entladeplatz auf ihrer Öffnung kopfstehend bereitgestellt werden.

4. Verfahren nach einem der Ansprüche 1 bis 3, **dadurch gekennzeichnet, dass** die Behälter nach dem Umsetzen bodenstehend mit nach oben weisender Öffnung auf dem Ablauftisch abgestellt werden.

5. Verfahren nach wenigstens einem der Ansprüche 1 bis 4, **dadurch gekennzeichnet, dass** Behälter nach dem Abheben von einem am Entladeplatz bereitgehaltenen Stapel und während dem Umsetzen in Richtung zum Ablauftisch mit zumindest teilweise nach unten gerichteter Öffnung über einen zwischen Entladeplatz und Ablauftisch liegenden Freiraum bewegt werden.

6. Verfahren nach Anspruch 5, **dadurch gekennzeichnet, dass** dem Freiraum eine Einrichtung zum Aufnehmen von aus den Behältern ausgeschiedenen Fremdkörpern zugeordnet ist.

7. Verfahren nach wenigstens einem der vorhergehenden Ansprüche, **dadurch gekennzeichnet, dass** ein mehrlagiger Behälterstapel vor dem Entpalettieren als komplette Einheit, insbesondere einschließlich einer den Stapel tragenden Palette, gewendet wird, vorzugsweise in eine kopfstehende Position der Behälter.

8. Vorrichtung zum Entpalettieren von gestapelten Sammelbehältern durch Abnehmen der Behälter von einem Stapel mit einem verfahrbaren Greifkopf und Umsetzen auf einen seitlich beabstandeten Ablauftisch, insbesondere zum Ausführen des Verfahrens nach wenigstens einem der Ansprüche 1 bis 7, wobei die Vorrichtung eine annähernd horizontale Achse zum Wenden von wenigstens einseitig offenen Behältern um diese Achse vor oder während dem Umsetzen aufweist.

9. Vorrichtung nach Anspruch 8, **dadurch gekennzeichnet, dass** die Wendeachse in den Greifkopf integriert und mit diesem zusammen verfahrbar oder separat, insbesondere im Bereich eines Entladeplatzes, angeordnet ist.

10. Vorrichtung nach Anspruch 8 oder 9, **dadurch gekennzeichnet, dass** der Greifkopf zum Erfassen einzelner Behälterlagen oder eines ganzen Stapels von Behältern ausgebildet ist.

11. Vorrichtung nach wenigstens einem der Ansprüche 8 bis 10, **dadurch gekennzeichnet, dass** zwischen einem Entladeplatz und einem Ablauftisch ein Freiraum mit einer Sammeleinrichtung für Fremdkörper oder Abfälle angeordnet ist.

12. Vorrichtung nach wenigstens einem der Ansprüche 8 bis 11, **dadurch gekennzeichnet, dass** vorzugsweise im Bereich eines Entladeplatzes eine Einrichtung zum Erkennen der Lage der Öffnung wenigstens einseitig offener Behälter zum Unterscheiden boden- oder kopfstehend bereitgestellter Behälter vorgesehen ist.
